# FASCICULE DE BREVET EUROPEEN

(11) **EP 3 704 433 B1**
(45) Date de publication et mention de la délivrance du brevet: **16.08.2023**
(21) Numéro de dépôt: 18811786.5
(22) Date de dépôt: 28.11.2018
(51) Int. Cl.: F28D 20/02

(54) **DISPOSITIF THERMIQUE A CAPACITE DE STOCKAGE POUR VEHICULE**
WÄRMEVORRICHTUNG MIT SPEICHERFÄHIGKEIT FÜR EIN FAHRZEUG
THERMAL DEVICE WITH STORAGE CAPACITY FOR A VEHICLE

(30) Priorité: 28.11.2017 FR 1761245
(43) Date de publication de la demande: 09.09.2020
(73) Titulaire: Valeo Systemes Thermiques, 78322 Le Mesnil Saint Denis Cedex (FR)
(72) Inventeur: TISSOT, Julien, 78322 Le Mesnil Saint-Denis Cedex (FR); LISSNER, Michael, 78322 Le Mesnil Saint-Denis Cedex (FR); AZZOUZ, Kamel, 78322 Le Mesnil Saint-Denis Cedex (FR)
(74) Mandataire: Valeo Systèmes Thermiques
(86) Numéro de dépôt international: PCT/EP2018/082903
(87) Numéro de publication internationale: WO 2019/106051

(56) Documents cités:
- EP-A2- 2 896 898
- WO-A2-2011/094371
- JP-A- 2006 038 328
- US-A1- 2004 194 908
- US-A1- 2015 114 590

## Description

Le domaine de la présente invention est celui des batteries thermiques et plus précisément les batteries thermiques comportant un matériau à changement de phase. Les batteries thermiques permettent de stocker de la chaleur et de la restituer. Elles sont employées pour les véhicules électriques, thermiques et hybrides.

Lors de l'utilisation d'une batterie thermique de stockage avec un véhicule électrique, le chargement de la batterie thermique est, en principe, réalisé lors du chargement de la batterie électrique du véhicule. Cette batterie électrique est une ressource embarquée qui alimente le ou les moteurs électriques pendant le déplacement du véhicule. Lors de l'utilisation du véhicule électrique, l'énergie thermique stockée dans la batterie thermique peut être utilisée à la mise en marche du système de chauffage pour diffuser de la chaleur dans l'habitacle du véhicule automobile.

Le système de chauffage pour chauffer l'air de l'habitacle d'un véhicule automobile fonctionnant à l'aide d'un fluide tel qu'un fluide caloporteur, la batterie thermique réchauffe le fluide caloporteur avant son passage à l'intérieur d'un aérotherme chauffant l'air destiné à être diffusé dans l'habitacle. L'énergie fournie par la batterie thermique permet donc d'éviter l'activation d'un radiateur électrique, permettant ainsi d'économiser l'énergie correspondante stockée par la batterie électrique qui aurait été utilisée en l'absence d'une batterie thermique de stockage. Ainsi, le fonctionnement du chauffage de l'air destiné à l'habitacle via la batterie thermique de stockage n'impact pas l'autonomie du véhicule électrique.

Lors de l'utilisation d'une batterie thermique avec un véhicule thermique, c'est-à-dire muni spécifiquement d'un moteur à combustion interne, l'énergie thermique stockée à l'intérieur de la batterie thermique provient de l'énergie produite lors d'un précédent roulage dudit véhicule. Les fluides utilisés pour refroidir le moteur ou la boîte de vitesse automatique par exemple, peuvent être utilisés pour charger la batterie thermique, puisque caloporteurs. En effet, l'huile de la boîte de vitesse automatique rejette, dans un usage classique, une quantité déterminée de chaleur. La quantité déterminée de chaleur peut être stockée dans une batterie thermique et ensuite utilisée lors du démarrage du véhicule automobile pour permettre l'augmentation rapide de la température de l'air de l'habitacle et/ou de l'huile du moteur thermique et/ou de l'huile de la boîte de vitesse automatique, réduisant ainsi les frottements dus à la viscosité de l'huile. On réduit ainsi une surconsommation de carburant au démarrage, limitant alors l'émission de polluants lors des premières minutes d'utilisation du véhicule.

Dans la conception des batteries thermiques, autrement appelés dispositifs thermiques à capacité de stockage, il est déjà connu d'utiliser des tubes pour encapsuler un matériau à changement de phase (MCP ou PCM en anglais pour « Phase Change Material ») capable de stocker et libérer une quantité déterminée de chaleur. Une des dispositions connues de ces tubes, selon le document WO2016120280, est de les monter en spirale pour former un enroulement, la batterie thermique enfermant cet enroulement. Un fluide caloporteur circule alors au sein de cette batterie thermique, entre les spires de l'enroulement.

La mise en place d'un ou de plusieurs tubes de matériau à changement de phase enroulés pose un problème concernant la circulation du fluide caloporteur au travers de cet enroulement, et donc plusieurs inconvénients.

En premier lieu, du fait du rayon de cintrage limité du tube, l'enroulement comporte une partie centrale le long de son axe qui induit une répartition non homogène du fluide caloporteur circulant au coeur de la batterie thermique.

En second lieu, les batteries thermiques à spirale voient le fluide caloporteur circuler parallèlement à l'axe de l'enroulement. Cette organisation ne facilite pas la circulation du fluide ou le transfert calorifique. Pour un enroulement avec un pas resserré, la perte de charge est en effet très importante. A contrario, un enroulement espacé n'optimise pas l'efficacité globale de la batterie thermique.

Le document US 2004/194908 décrit un dispositif thermique selon le préambule de la revendication 1.

Le but de la présente invention est donc de résoudre les inconvénients décrits cidessus en concevant un dispositif thermique à capacité de stockage où les pertes de charge sont limitées, où le fluide caloporteur circulant est réparti de façon homogène, et où le stockage de chaleur, et donc la puissance de transfert thermique, est augmenté.

L'invention a donc pour objet un dispositif thermique à capacité de stockage pour véhicule, comprenant une enceinte qui loge un conduit et au moins un tube contenant un matériau à changement de phase, le tube étant enroulé autour du conduit pour former un enroulement, le conduit délimitant un premier espace dans lequel un fluide est apte à circuler, l'enroulement comprenant un deuxième espace dans lequel le fluide est apte à circuler, caractérisé en ce que le conduit comprend des ouvertures radiales mettant en communication le premier espace et le deuxième espace.

Le dispositif thermique à capacité de stockage, autrement appelé batterie thermique de stockage, délimite un volume dans lequel le fluide, en l'occurrence un fluide caloporteur, circule en vue soit de fournir une énergie thermique, soit de récupérer une énergie thermique. Ces échanges thermiques sont mis en oeuvre grâce à la présence du matériau à changement de phase. En effet, le matériau à changement de phase a pour propriété de stocker ou libérer une quantité déterminée de chaleur. Un fluide caloporteur circulant pourra ainsi bénéficier de ce dégagement de chaleur. Le matériau à changement de phase est encapsulé dans au moins un tube afin de rester confiné au sein du tube.

Le matériau à changement de phase peut être choisi parmi le groupe constitué d'un acide gras d'origine végétale, un alcool gras d'origine végétale, une paraffine, un sel hydraté et leurs mélanges. Le matériau à changement de phase peut présenter une température de changement de phase comprise entre 45°C et 100°C. Préférablement, la température de changement de phase est comprise entre 45°C et 55°C. Alternativement, la température de changement de phase est comprise entre 80°C et 100°C. Le matériau à changement de phase peut présenter une chaleur latente de changement de phase supérieure à 200 kJ/kg, et de préférence supérieure à 280 kJ/kg. Une chaleur latente de changement de phase garantit une grande capacité d'emmagasinage d'énergie.

Les capacités de stockage d'énergie se voient augmentées par la présence d'un maximum de matériau à changement de phase dans le dispositif thermique à capacité de stockage. Pour densifier la quantité de ce matériau à changement de phase, le ou les tubes le contenant forment un enroulement de spires, une spire correspondant à un tour d'enroulement d'un tube. Le ou les tubes sont en effet enroulés en spirale selon un axe d'enroulement, l'enroulement se faisant en périphérie d'un conduit. Conduit et enroulement partagent alors un même axe.

De façon avantageuse pour compacter de façon optimale l'enroulement, l'enroulement et le conduit sont en contact direct.

Selon un autre aspect, le tube est enroulé en quinconce autour du conduit. Ainsi la forte compacité du ou des tubes permet un important stockage de chaleur, pour une puissance de stockage thermique optimale.

Afin de permettre l'enroulement, le tube peut être flexible. Pour ce faire, le tube est avantageusement constitué d'une matière synthétique. Par exemple, un tube fait d'un matériau plastique, relativement souple, permettra la formation de spires resserrées sans que le tube ne plie. Pour un tube en matière plastique telle que le polycarbonate, un rayon de cintrage minimum est de l'ordre de 25mm.

Selon un autre aspect, le dispositif thermique à capacité de stockage ne contient qu'un unique tube. Un unique tube a l'avantage de limiter le risque de fuite du matériau à changement de phase. Alternativement, le dispositif thermique à capacité de stockage contient plusieurs tubes.

Le conduit et l'enroulement délimitent respectivement un premier espace et un deuxième espace aptes à voir circuler un fluide caloporteur, tel qu'une huile.

Le premier espace est délimité par le conduit. Ce conduit, préférentiellement cylindrique, comporte un axe d'allongement dit axe central du conduit, sur lequel est centré le dispositif thermique à capacité de stockage. Le fluide caloporteur circule dans ce conduit selon un flux globalement laminaire, parallèle à l'axe central du conduit. Le conduit dispose d'un diamètre compris entre 10 et 50 millimètres environ. Ce diamètre est suffisamment important pour permettre une répartition homogène du fluide caloporteur. A noter que l'axe d'enroulement est confondu avec l'axe central du conduit. La présence du conduit permet par ailleurs d'occuper l'espace central de l'enroulement, laissé vide du fait des limites de cintrage imposées par le tube.

Le second espace est quant à lui compris dans le volume de l'enroulement : l'enroulement comprend en effet un volume occupé par les spires, et un volume séparant les spires, c'est-à-dire interstitiel au(x) tube(s). C'est ce dernier volume qui correspond au deuxième espace de circulation.

Le conduit comprend des ouvertures radiales, ces ouvertures traversant toute l'épaisseur du conduit de sorte que le fluide caloporteur circule au travers de ces ouvertures, du premier espace vers le deuxième espace. La disposition de ces ouvertures induit une circulation radiale du fluide caloporteur. Cette circulation permet une faible perte de charge et une diffusion homogène du fluide caloporteur dans l'enceinte.

Selon un aspect de l'invention, les ouvertures radiales sont des fentes. On entend par fente le fait que les ouvertures radiales sont plus longues que larges. Le caractère longitudinal de ces ouvertures s'apprécie par rapport à l'axe central du conduit.

Grâce à la forme en fentes, l'écoulement radial est rendu encore plus homogène. En effet, cette forme assure que le fluide caloporteur arrive dans le deuxième espace directement au niveau de l'espace interstitiel aux spires de tube. Cette disposition longitudinale facilite également la circulation de fluide caloporteur, puisque les fentes sont alors également parallèles au flux dudit fluide circulant dans le conduit. Alternativement les fentes dessinent une spirale autour de l'axe central du conduit. Quel que soit la disposition des ouvertures radiales, celles-ci n'empêchent pas au conduit d'avoir une résistance élevée aux contraintes mécaniques, et plus particulièrement aux contraintes de dilatation, imposées par les spires de l'enroulement.

Selon un aspect de l'invention, l'enceinte est pourvue d'une paroi périphérique et d'un fond à l'une des extrémités de la paroi périphérique, ledit dispositif thermique à capacité de stockage comprenant un couvercle possédant une première ouverture et une deuxième ouverture, le couvercle étant disposé à une autre extrémité de la paroi périphérique. L'enceinte, le fond et le couvercle délimitent un circuit de circulation du fluide propre au dispositif thermique à capacité de stockage, dont une entrée et une sortie sont portées par le couvercle, celui-ci disposant à cet effet de deux ouvertures. La première ouverture permet l'entrée du fluide caloporteur, la deuxième ouverture permet quant à elle la sortie du fluide caloporteur. L'entrée et la sortie de fluide sont, selon un aspect particulier de l'invention, prolongées de tubulures, intégrées au circuit de circulation du fluide caloporteur.

La paroi périphérique à ce cylindre possède deux extrémités, dont l'une est fermée par le fond. L'association entre la paroi périphérique et le fond forme un cuvelage, avantageusement monobloc. Pour une meilleure tenue mécanique, l'enceinte est faite d'un matériau métallique, avantageusement d'aluminium.

L'autre extrémité de l'enceinte se voit fermée par le couvercle, ce dernier étant une pièce rapportée sur l'enceinte, prenant appui sur sa paroi périphérique. De façon particulière, un moyen d'étanchéité, comme un joint torique, est disposé à l'interface entre la paroi périphérique et le couvercle, afin d'assurer une jonction hermétique entre ces deux éléments.

Pour des dimensions prises dans l'axe central du conduit, l'enceinte a les dimensions suivantes : une longueur de l'ordre de 200 millimètres et un diamètre de l'ordre de 150 millimètres. Ces dimensions donnent au dispositif thermique à capacité de stockage un caractère compact, rendant son encombrement acceptable au sein de véhicules électriques, hybrides ou thermiques.

De façon particulière, le dispositif thermique à capacité de stockage est séparé thermiquement de son environnement par un dispositif d'isolation thermique l'entourant. Ainsi, cette isolation thermique permet d'éviter les déperditions thermiques du dispositif thermique à capacité de stockage.

Selon un aspect de l'invention, l'enceinte comprend un troisième espace dans lequel le fluide est apte à circuler, ménagé radialement entre l'enroulement et une surface interne de la paroi périphérique de l'enceinte. Ainsi, un espace de libre circulation est laissé au fluide caloporteur le long de la paroi. Vu en coupe, ce troisième espace prend la forme d'un anneau.

Le fluide caloporteur circule dans ce troisième espace selon un flux globalement laminaire, parallèle à l'axe central du conduit. Par ailleurs, le flux du fluide caloporteur dans le troisième espace de circulation est dans un sens inverse au sens du flux circulant dans le premier espace de circulation. Cette architecture est due au positionnement de l'entrée et de la sortie, disposées du même côté du dispositif thermique à capacité de stockage, au niveau du couvercle.

Selon un aspect de l'invention, l'enroulement est contenu dans une ceinture de maintien ajourée. L'enroulement, afin qu'il conserve sa forme initiale, est entouré de cette ceinture de maintien lui imposant une limite spatiale. Cette ceinture de maintien permet de contenir l'enroulement en lui imposant un certain diamètre, celui de la ceinture de maintien.

Pourvue d'ouvertures, cette ceinture de maintien permet par ailleurs la circulation du fluide caloporteur du deuxième espace au troisième espace. Avantageusement, les ouvertures ménagées dans la ceinture de maintien sont des ouvertures longitudinales, plus particulièrement parallèles à l'axe central du conduit. La forme longitudinale des ouvertures permet un remplissage homogène du troisième espace lors du passage au travers de la ceinture de maintien, n'entravant pas la circulation du fluide caloporteur tout en garantissant une résistance mécanique face à l'enroulement de tube pouvant venir en appui.

La ceinture de maintien est par exemple faite d'un matériau synthétique. Plus particulièrement, ce matériau est un plastique.

Selon un aspect de l'invention, le dispositif thermique à capacité de stockage comprend au moins un élément d'espacement déterminant le troisième espace. Cet élément d'espacement assure un écart constant entre la ceinture, ou l'enroulement quand le dispositif thermique est dépourvu de ceinture, et la paroi périphérique. Ces éléments d'espacement permettent également d'avoir un troisième espace au volume suffisant pour assurer la fluidité de la circulation dans ce troisième espace. L'écart entre la ceinture et la paroi périphérique est au minimum égal à une largeur la plus grande de l'élément d'espacement, la largeur de l'élément d'espacement étant mesurée perpendiculairement à l'axe central du conduit.

De façon particulière, plusieurs éléments d'espacement sont répartis de façon régulière dans le troisième espace. Avantageusement, les éléments d'espacement sont de même largeur. Cette constance garantit une homogénéité de la circulation de fluide caloporteur dans le troisième espace.

Selon un mode de réalisation, au moins un élément d'espacement est porté par la paroi périphérique de l'enceinte. Ledit élément d'espacement peut alors venir au contact d'enroulement, ou de la ceinture de maintien si cette dernière est présente.

Selon un autre mode de réalisation, au moins un élément d'espacement est porté par la ceinture de maintien. Ledit élément d'espacement peut alors venir au contact de la paroi périphérique de l'enceinte.

Selon un mode plus particulier de l'invention, sont combinées une paroi périphérique portant au moins un élément d'espacement, et une ceinture de maintien portant au moins un élément d'espacement.

Selon un aspect de l'invention, l'élément d'espacement comprend des nervures disposées parallèlement à un axe central du conduit. Cette disposition permet aux nervures d'être parallèles à la circulation du fluide caloporteur dans le troisième espace, et n'en contrarient ainsi pas la trajectoire. De façon particulière, plusieurs nervures sont disposées selon un même alignement et séparées les unes des autres par un créneau. Chaque créneau séparant les nervures lignées permet de ne pas compartimenter la circulation au sein du troisième espace.

Selon un aspect particulier de l'invention, les nervures et la ceinture de maintien forment un ensemble monobloc obtenu par moulage.

Selon un aspect de l'invention, le couvercle de l'enceinte et un disque disposé entre le couvercle et l'enroulement, délimitent une première chambre et une deuxième chambre. La première chambre est une chambre de réception, destinée à voir entrer un fluide. La première chambre est interposée entre l'entrée et le premier espace, et est en communication avec le premier espace. Cette communication est permise grâce à une ouverture ménagée dans le disque. La deuxième chambre est une chambre collectrice, destinée à collecter le fluide du troisième espace. La deuxième chambre est interposée entre le troisième espace et la sortie, et est en communication avec le troisième espace. Cette communication est permise grâce à un passage existant entre le couvercle et le disque.

Le couvercle de l'enceinte est par ailleurs pourvu d'une paroi de séparation sur laquelle le disque prend appui au niveau d'un bord emboîtant émergeant du disque. Le disque constitue la séparation entre les chambres et l'enroulement, le fluide caloporteur transitant nécessairement par le premier espace ou le troisième espace.

Selon un aspect de l'invention, le disque comprend au moins un dispositif de positionnement qui s'engage avec une extrémité longitudinale du tube. Un tube encapsulant le matériau à changement de phase comporte deux extrémités. Un dispositif de positionnement permet de débuter l'enroulement du tube, par une de ses extrémités, autour du conduit. De façon particulière, le dispositif de positionnement est orienté transversalement par rapport à l'axe central du conduit. Selon un exemple de réalisation, le dispositif de positionnement est un ergot.

Le dispositif de positionnement permet par ailleurs de fixer le tube dans le dispositif thermique à capacité de stockage, par une extrémité débutant l'enroulement. En effet, une extrémité du tube est enfilée sur le dispositif de positionnement lors de la réalisation de l'enroulement.

Selon un mode particulier de l'invention, un système d'étanchéité propre au tube vient celer ses extrémités longitudinales afin d'encapsuler le matériau à changement de phase. Ce système d'étanchéité peut être formé par soudage, collage ou par un bouchon mécanique rapporté sur le tube. Avantageusement, le système d'étanchéité du tube est porté par le dispositif de positionnement.

Selon un aspect de l'invention, le disque comporte au moins un logement de réception du ou des tubes. Le disque comporte deux faces : une première face disposée en regard du couvercle, et une deuxième face disposée en regard de l'enroulement. C'est cette deuxième face qui porte le logement de réception, afin qu'il entre en contact de l'enroulement. Ce logement de réception permet en effet de fixer le bon positionnement de spires situées au contact du disque. Selon un mode de réalisation, au moins un peigne, associé à la deuxième face du disque, porte au moins un logement de réception. Alternativement, le logement de réception prend la forme d'une rigole ménagée sur la deuxième face du disque.

Selon un aspect de l'invention, le conduit est pourvu en sa surface externe d'au moins une cannelure hélicoïdale. L'enroulement du tube entre en contact avec la surface externe du conduit. Afin de guider cet enroulement, au moins une cannelure hélicoïdale est ménagée sur la surface externe du conduit. Son profil est destiné à coopérer avec une des spires de l'enroulement pour assurer un guidage et faire que le pas d'enroulement soit maintenu constant. Les cannelures hélicoïdales peuvent couvrir une partie ou l'intégralité de la surface externe du conduit.

D'autres caractéristiques, détails et avantages de l'invention ressortiront plus clairement à la lecture de la description donnée ci-après à titre indicatif en relation avec des dessins dans lesquels :
- la figure 1 est une vue générale, en perspective, d'un dispositif thermique à capacité de stockage selon l'invention,
- la figure 2 est une vue en perspective et en coupe longitudinale d'un dispositif thermique à capacité de stockage selon l'invention,
- la figure 3 est une vue en perspective d'un composant parti à un dispositif thermique à capacité de stockage selon l'invention,
- la figure 4 est une vue en perspective et en coupe transversale de certains composants d'un dispositif thermique à capacité de stockage, selon un mode de réalisation,
- la figure 5 est une vue en perspective d'un couvercle partie à un dispositif thermique à capacité de stockage selon l'invention,
- la figure 6 est une vue en perspective d'un couvercle, d'un disque et d'un conduit partie à un dispositif thermique à capacité de stockage selon l'invention,
- la figure 7 est une vue en perspective et en coupe transversale d'un couvercle et d'un disque selon le mode de réalisation de la figure 6.

Il faut tout d'abord noter que les figures exposent l'invention de manière détaillée pour mettre en oeuvre l'invention, lesdites figures pouvant bien entendu servir à mieux définir l'invention, le cas échéant.

Dans la suite de la description, le caractère longitudinal des composants s'appréciera par rapport à un axe central X, défini par un conduit parti au dispositif à capacité de stockage selon l'invention. Sera a considéré comme longitudinal tout objet ou axe s'étendant sensiblement dans la même direction que l'axe central X du conduit. Par transverse, on entendra tout objet ou axe venant couper l'axe central X du conduit.

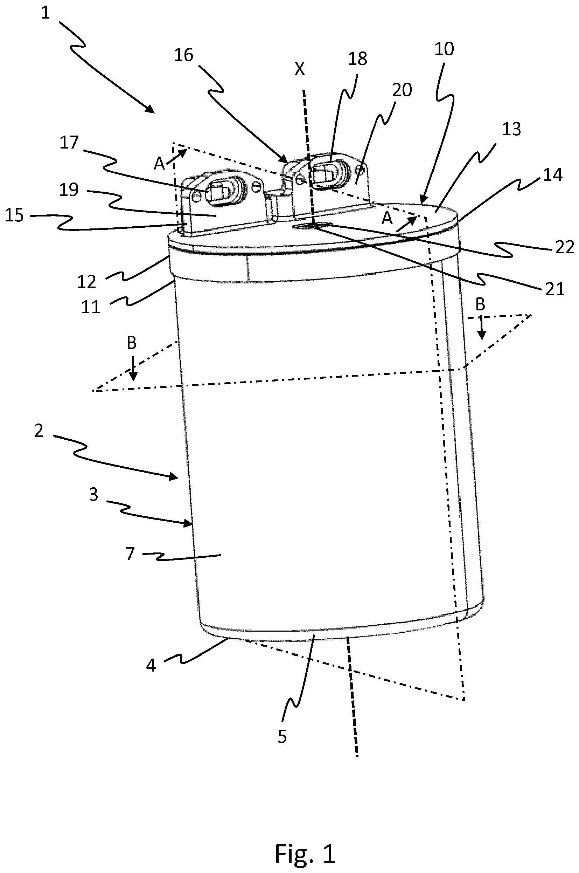

En se référant tout d'abord à la figure 1, on voit un dispositif thermique à capacité de stockage 1 dans son ensemble. Une enceinte 2 est pourvue d'une paroi périphérique 3 en forme de cylindre à circonférence globalement régulière, fermée à une première extrémité 4 par un fond 5 circulaire de même circonférence. La paroi périphérique 3 dispose d'une surface interne et d'une surface externe 7, le fond 5 dispose également d'une surface interne et d'une surface externe. La paroi périphérique 3 et le fond 5, formés d'un matériau métallique comme de l'aluminium, ou un alliage d'aluminium, sont solidaires l'un l'autre, assemblés pour donner à l'enceinte 2 une forme de cuve.

L'enceinte 2 est coiffée d'un couvercle 10 circulaire, fermant une deuxième extrémité 11 de l'enceinte 2 par emboîtement. Cette deuxième extrémité 11 est pourvue d'un bandeau 12 venant créer une surépaisseur de la deuxième extrémité 11, bandeau 12 sur lequel vient prendre appui le couvercle 10. Enceinte 2 et couvercle 10 délimitent les pourtours extérieurs du dispositif thermique à capacité de stockage 1. En surface du dispositif thermique à capacité de stockage 1, sont visibles différentes parties du couvercle 10. Une première surface 13, partie au couvercle, externe, plane et circulaire, est pourvue d'une bordure périphérique 14 prenant appui sur le bandeau 12 de l'enceinte 2. Un premier port 15 et un deuxième port 16, partis au couvercle, se terminent respectivement par une première ouverture 17 et une deuxième ouverture 18 du couvercle 10. Cette première ouverture 17 et cette deuxième ouverture 18 sont entourées respectivement d'une première face d'accostage 19 et d'une deuxième face d'accostage 20, faces d'accostages 19, 20 parallèles à l'axe central X du conduit 31. La première ouverture 17 et la deuxième ouverture 18 du couvercle 10 sont présentes toutes deux du côté de la deuxième extrémité 11 de l'enceinte 2 et permettent respectivement l'entrée et la sortie d'un fluide caloporteur amené à circuler au sein du dispositif thermique à capacité de stockage 1. Le premier port 15 et le deuxième port 16 sont disposés à la périphérie extérieure de la première surface 13, non loin de la bordure périphérique 14. Le premier port 15 et le deuxième port 16 relient la première ouverture 17 et la deuxième ouverture 18 à la première surface 13 du couvercle 10. C'est par la première face d'accostage 19 et la deuxième face d'accostage 20 que peut se faire le raccordement entre un circuit de circulation interne au dispositif thermique à capacité de stockage 1 et un circuit du fluide caloporteur extérieur au dispositif thermique à capacité de stockage 1.

Un lamage 21, réalisé sur la première surface 13 du couvercle 10, est destiné à accueillir et positionner un écrou de serrage 22 fixé à un tirant.

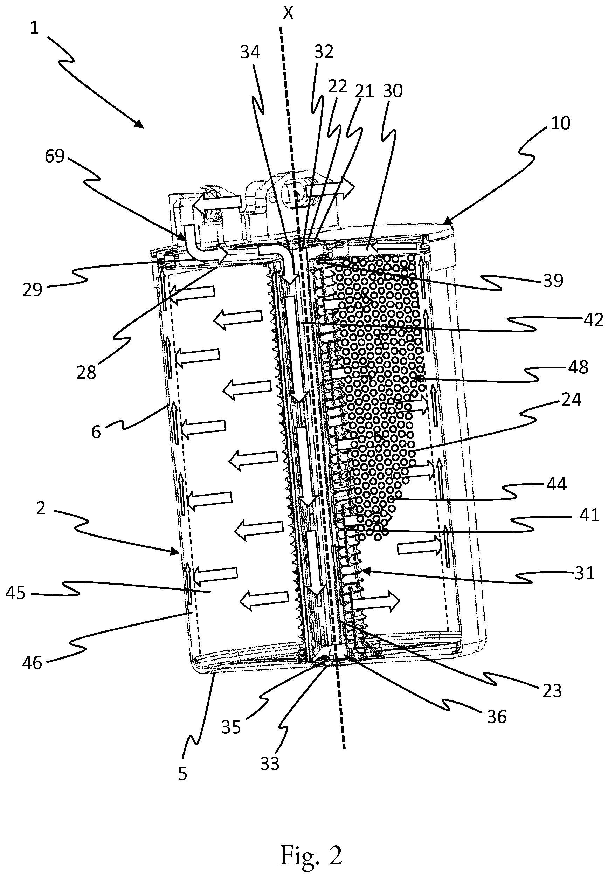

La figure 2 montre l'agencement interne du dispositif thermique à capacité de stockage 1 de la figure 1, observé selon le plan de coupe A-A défini en figure 1. Le circuit de circulation du fluide caloporteur y est représenté par des flèches 69. Dans un souci de lisibilité et afin d'alléger la figure 2, seules quelques sections de tubes 24, visibles sur la partie droite de la figure, ont été représentés pour la compréhension de leur agencement au sein du dispositif thermique à capacité de stockage 1.

Différents espaces se succèdent dans le circuit de circulation du fluide 69 au sein de la structure du dispositif thermique à capacité de stockage 1. Ces espaces sont destinés à la circulation du fluide caloporteur. Il s'agit d'une première chambre 29, d'un premier espace 42, d'un deuxième espace 45, d'un troisième espace 46 et d'une deuxième chambre 30.

Un conduit 31 de forme tubulaire traverse le dispositif thermique à capacité de stockage 1. Un volume interne au conduit 31 défini un premier espace 42, apte à voir circuler le fluide caloporteur. Le conduit 31 est pourvu d'ouvertures : une première ouverture 39 à l'une de ses extrémités, une deuxième ouverture à l'autre de ses extrémités, et des ouvertures radiales 41.

La première ouverture 39 du conduit 31 vient en appui d'un disque 28 placé entre le conduit 31 et le couvercle 10. Le couvercle 10 et le disque 28 sont centrés selon l'axe central X du conduit 31. La première chambre 29 délimitée par une partie du disque 28 et une partie du couvercle 10 communique avec l'intérieur du conduit 31 grâce à une ouverture ménagée dans le disque 28. Ainsi, le fluide caloporteur peut circuler entre la première chambre 29 et le conduit 31.

L'extrémité du conduit 31 délimitant la deuxième ouverture vient en appui sur la surface interne du fond 5 de l'enceinte 2, et est maintenue par un cône 36 logé à l'intérieur du conduit 31 à sa deuxième ouverture.

Les ouvertures radiales 41 objet de l'invention sont réparties sur l'ensemble de la longueur et de la périphérie du conduit 31. Elles traversent toute son épaisseur, mettant en communication le premier espace 42 défini par le conduit 31 et ce qui entoure le conduit 31.

Des tubes 24, encapsulant un matériau à changement de phase 44, sont enroulés en périphérie du conduit 31. Certains des tubes 24 forment un enroulement 48 et sont illustrés sur la figure 2 par leur simple section. Les tubes 24 prennent un arrangement en quinconce afin de former l'enroulement 48 dense, les spires les plus centrales à l'enroulement 48 prenant appui dans des cannelures hélicoïdales d'une surface externe 38 du conduit 31.

Le volume occupé par cet enroulement 48 comprend le volume occupé par les tubes 24, et un espace interstitiel entre les tubes 24 et correspondant au deuxième espace 45, ce dernier étant apte à être parcouru par le fluide caloporteur.

L'enroulement 48 occupe la majeure partie de l'enceinte 2 formée par le dispositif thermique à capacité de stockage 1. Sur l'exemple de la figure 2, l'enroulement 48 est réparti sur toute la hauteur du conduit 31, du disque 28 à la surface interne du fond 5 de l'enceinte 2. Cet enroulement 48 reste cependant à distance d'une surface interne 6 de la paroi périphérique 3 de l'enceinte 2, laissant un espace en périphérie de l'enroulement 48. Cet espace, situé entre la surface interne 6 de la paroi périphérique 3 et l'enroulement 48, constitue un troisième espace 46 où le fluide caloporteur peut circuler.

Un tirant 23 est inclus dans un conduit 31, traversant l'enceinte 2 de part en part, et possédant un axe central confondu avec l'axe central X du conduit 31 sur lequel le tirant 23 est aligné. Le tirant 23, fait d'une barre métallique, permet de maintenir fermée le dispositif thermique à capacité de stockage 1. Le tirant 23 est pourvu d'une extrémité filetée 32 et d'une extrémité à tête plate 33. L'extrémité filetée 32 traverse un passage 34 ménagé dans le couvercle 10 au niveau du lamage 21. L'extrémité à tête plate 33 traverse un passage 35 ménagé dans le fond 5 de l'enceinte 2, traversant également un cône 36 solidaire de la surface interne du fond 5 de l'enceinte 2. Le tirant 23 est maintenu dans son logement par l'écrou de serrage 22, placé sur l'extrémité filetée 32 du tirant 23. Afin de clore hermétiquement le passage 34 et le passage 35, un joint torique est placé à extrémité à tête plate 33, contre le 5 fond de l'enceinte 2. Un autre joint torique est placé entre l'écrou de serrage 22 et le couvercle 10. Ainsi le circuit de circulation de fluide de l'enceinte reste hermétiquement fermé, et la tension exercée par l'écrou de serrage 22 visé sur le tirant 23, assure le maintien des pièces placées entre le fond 5 de l'enceinte 2 et le couvercle 10.

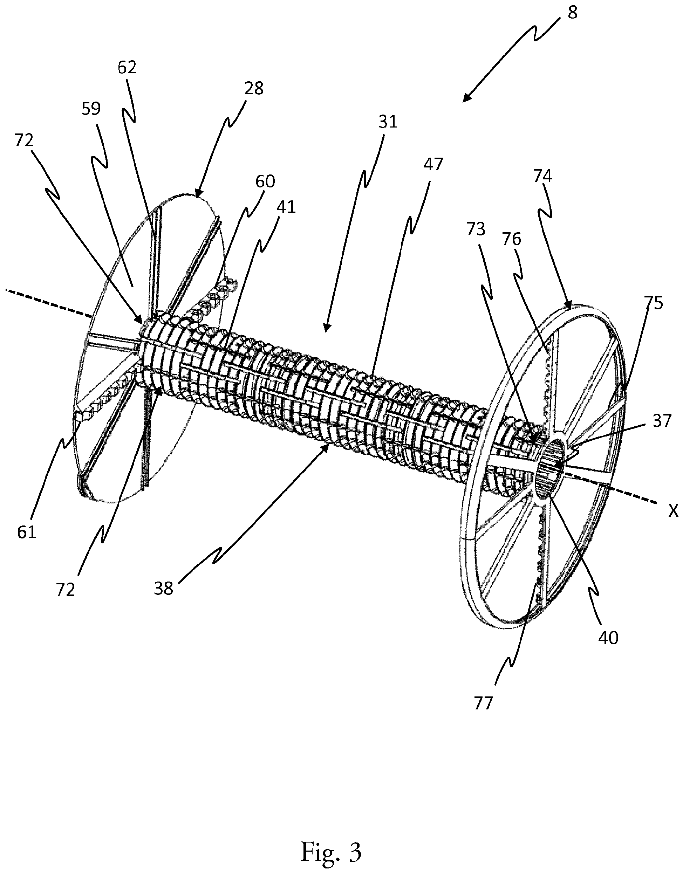

La figure 3 montre une variante structurelle du conduit 31 assemblé au disque 28, formant une structure monobloc 8. Le conduit 31 est doté d'une surface interne 37, d'une surface externe 38, d'une première extrémité 72 et d'une deuxième extrémité 73. La première extrémité 72 du conduit 31 est liée au disque 28 de sorte à ce que le disque 28 et le conduit 31 forment une structure monobloc 8, autrement dit indissociables sans altérer l'intégrité de la structure monobloc 8.

La première ouverture du conduit 31 est destinée à rester libre au sein du dispositif thermique à capacité de stockage, et à être positionnée au regard du couvercle 10, de sorte à ce qu'un fluide puisse circuler vers l'intérieur du conduit 31. Le disque 28 se lie à la première ouverture du conduit 31 sans l'obturer. Une deuxième ouverture 40, située à l'autre extrémité du conduit 31, est destinée à être close, en venant en appui sur le fond de l'enceinte.

La surface externe 38 du conduit 31 présente un profil à cannelures hélicoïdales 47. Les cannelures hélicoïdales 47 sont destinées à servir de logement à un enroulement de tubes. Chaque spire de l'enroulement est destiné à correspondre à un tour en surface externe 38 du conduit 31. Le conduit 31 se voit en effet entouré des spires de cet enroulement lors de sa mise en oeuvre dans le dispositif à capacité de stockage, le conduit 31 servant de support aux tubes, guidées dans leur disposition grâce à ces cannelures hélicoïdales 47.

Les cannelures hélicoïdales 47, à la surface externe 38 du conduit 31, sont traversées par des ouvertures radiales 41. Ces ouvertures radiales 41 sont longitudinales et prennent la forme de fentes, réparties de façon homogène sur le conduit 31. Les ouvertures radiales 41 s'alignent selon plusieurs axes, parallèles les uns aux autres et également parallèles à l'axe central X du conduit 31. Pour deux alignements d'ouvertures radiales 41 successifs, les fentes correspondant aux ouvertures radiales 41 sont disposées en quinconce, de sorte à ce que le conduit 31 conserve l'intégrité de sa structure malgré les contraintes mécaniques, par la bonne répartition et l'alternance de « zones pleines », faites de matière, et de « zones ouvertes », ces dernières étant formées par les ouvertures radiales 41.

Rattaché solidairement à la première extrémité 72 du conduit 31, le disque 28 est centré sur la première ouverture du conduit 31. Une deuxième face 59 du disque 28 est dirigée vers le conduit 31. Cette deuxième face 59 comporte deux peignes 60, 61, destinés au bon positionnement de l'enroulement. Cette deuxième face 59 comporte également des paires de nervures de renfort 62. Peignes 60, 61 et nervures de renfort 62 s'étendant radialement à partir du conduit 31.

La structure monobloc 8 comprenant le disque 28 et le conduit 31 comporte en outre un anneau 74, destiné à venir en appui sur le fond de l'enceinte, afin de maintenir le conduit 31 en position centrale par rapport à l'enceinte. Des rayons 75 relient la deuxième extrémité 73 du conduit 31 à cet anneau 74 et assurent le positionnement de l'anneau 74 par rapport au conduit 31, de sorte à ce que le conduit 31 et l'anneau 74 soient centrés sur l'axe central X du conduit 31. L'anneau 74 comporte en outre deux peignes, 76, 77, destinés au bon positionnement de l'enroulement.

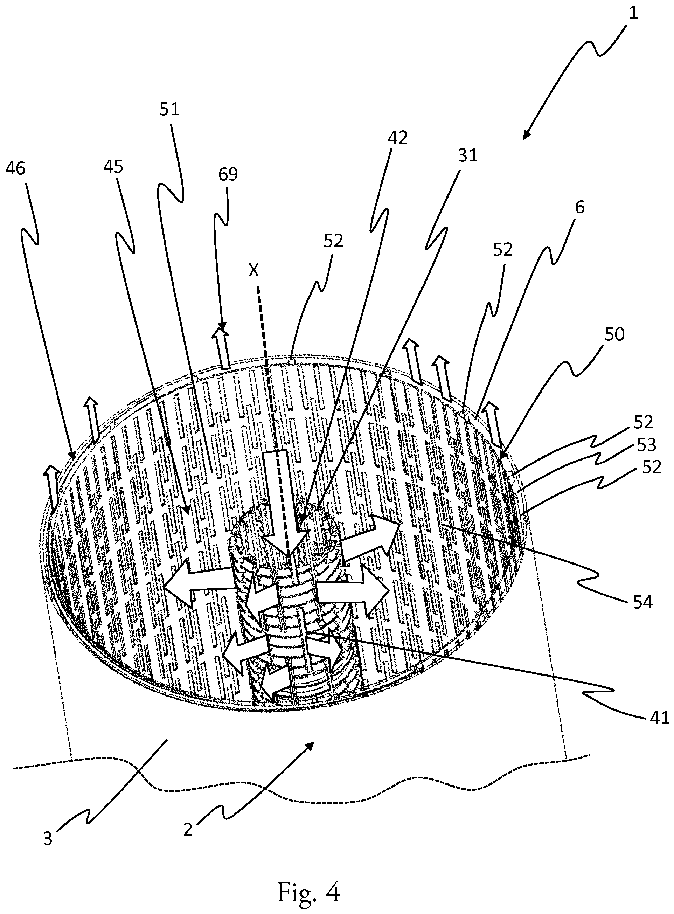

En se référant maintenant à la figure 4, on voit plus précisément les espaces aptes à être emprunté par le fluide caloporteur, grâce à une coupe transversale B-B du dispositif thermique à capacité de stockage 1 illustrée en figure 1.

Tout d'abord, le premier espace 42 est définit par le conduit 31. Puis, le deuxième espace 45 est situé entre les tubes de l'enroulement, l'enroulement n'étant pas représenté pour faciliter la lecture de la figure. Enfin, le troisième espace 46 définit un anneau en périphérie du deuxième espace 45. Les directions empruntées par le fluide caloporteur sont représentées par des flèches 69 : la circulation du fluide caloporteur est laminaire et parallèle à l'axe central X du conduit 31 au sein du premier espace 42 comme du troisième espace 46, bien qu'en sens opposé si l'on compare ces deux espaces. De façon distincte, la circulation du fluide caloporteur se fait radialement, par exemple dans un plan perpendiculaire à l'axe central X du conduit 31, cette direction étant induite par le passage du fluide caloporteur au travers les ouvertures radiales 41.

Le dispositif thermique à capacité de stockage 1 présenté en figure 4 comporte une ceinture de maintien 50 pourvue d'une paroi ajourée 51 et de nervures 52. Cette ceinture de maintien 50 est proximale à la surface interne 6 de la paroi périphérique 3 de l'enceinte 2, sa paroi ajourée 51 présentant un diamètre légèrement inférieur au diamètre de la surface interne 6. Les nervures 52 de cette ceinture de maintien 50 peuvent entrer en interaction avec la surface interne 6 de la paroi périphérique 3 de l'enceinte 2. La paroi ajourée 51 de la ceinture de maintien 50 peut quant à elle entrer en contact avec l'enroulement 48.

La première fonction de cette ceinture de maintien 50 est de contenir l'enroulement 48, non visible ici, et ainsi répondre à la pression mécanique que peut exercer l'enroulement 48 radialement vers l'extérieur. En effet, que ce soit dès le montage du dispositif thermique à capacité de stockage 1, ou lors de son utilisation, suite par exemple à la dilatation de l'enroulement 48, l'enroulement 48 peut voir son volume modifier, ainsi que sa position dans l'enceinte 2. La ceinture de maintien 50 doit ainsi avoir une certaine résistance à la pression, tout en gardant une certaine flexibilité pour éviter de se rompre. Ainsi, un matériau synthétique la constitue, le plus généralement un plastique, ce matériau ayant par ailleurs l'avantage de ne pas alourdir le dispositif thermique à capacité de stockage 1.

Cette fonction ne doit pas se faire au détriment de la circulation du fluide. La ceinture de maintien 50 est en effet présente à l'interface entre le deuxième espace 45 et le troisième espace 46, ou dans le troisième espace 46. La seconde fonction de cette ceinture de maintien 50 est donc de laisser passer le fluide. La ceinture de maintien 50 est ainsi pourvue d'une forte densité d'ouvertures 54 au niveau de sa paroi ajourée 51, à la façon d'un maillage, laissant un large passage puisque le ratio « zones ouvertes / zone pleines » est grand.

D'autre part, la ceinture de maintien 50 assure un espacement entre l'enroulement 48 et la surface interne 6 de la paroi périphérique 3 de l'enceinte 2, en assurant un diamètre de l'enroulement 48 plus faible que celui de l'enceinte 2, mesuré au niveau de sa surface interne 6. Un écart minimal existe ainsi pour le troisième espace 46 entre la paroi périphérique 3 et l'enroulement 48.

La ceinture de maintien 50 est par ailleurs munie d'un dispositif d'espacement formé par des nervures 52. Dans l'exemple de la figure 4, les nervures 52 prennent une forme rectiligne et allongée, disposées longitudinalement, s'étirant selon la même direction de que l'axe central X du conduit 31, et donc dans la même direction que le fluide circulant dans le troisième espace 46, n'en contrariant ainsi pas le mouvement. Les nervures 52 sont disposées de façon régulière sur toute la périphérie de la ceinture de maintien 50, dans un même alignement longitudinal, et sont séparées de créneaux 53, permettant de ne pas cloisonner le troisième espace 46 en autorisant une circulation de fluide caloporteur d'un côté d'une nervure à l'autre.

Le cheminement du fluide caloporteur à l'intérieur du dispositif thermique à capacité de stockage 1, signifié par des flèches 69 des figures 2 et 4, va maintenant être décrit. Le fluide caloporteur entre par la première ouverture 17 du couvercle 10 et passe par le premier port 15 débouchant sur la première chambre 29. Le fluide caloporteur passe alors de cette première chambre 29 au premier espace 42, le fluide caloporteur pouvant se répartir sur toute la longueur du conduit 31 en un flux globalement laminaire. Du fait de la présence des ouvertures radiales 41 du conduit 31, et du fait de l'obturation de la deuxième ouverture 40 du conduit 31, le fluide caloporteur emprunte une direction radiale par rapport à l'axe central X du conduit 31. Le fluide se diffuse alors dans le deuxième espace 45, circulant entre les tubes 24 de l'enroulement 48, au contact desquels les échanges thermiques entre le fluide caloporteur et le matériau à changement de phase 44 se font. Ayant circulé dans ce deuxième espace 45, le fluide caloporteur passe dans le troisième espace 46. Guidé par la paroi périphérique 3 de l'enceinte 2, le fluide caloporteur prend la même direction que celle prise dans le conduit 31, c'est-à-dire parallèle à l'axe central X du conduit 31, mais en un sens opposé. Un passage permet le transfert du fluide vers la première chambre 29, débouchant elle-même sur le deuxième port 16 du couvercle 10 pourvu de la deuxième ouverture 18, par laquelle le fluide caloporteur sort.

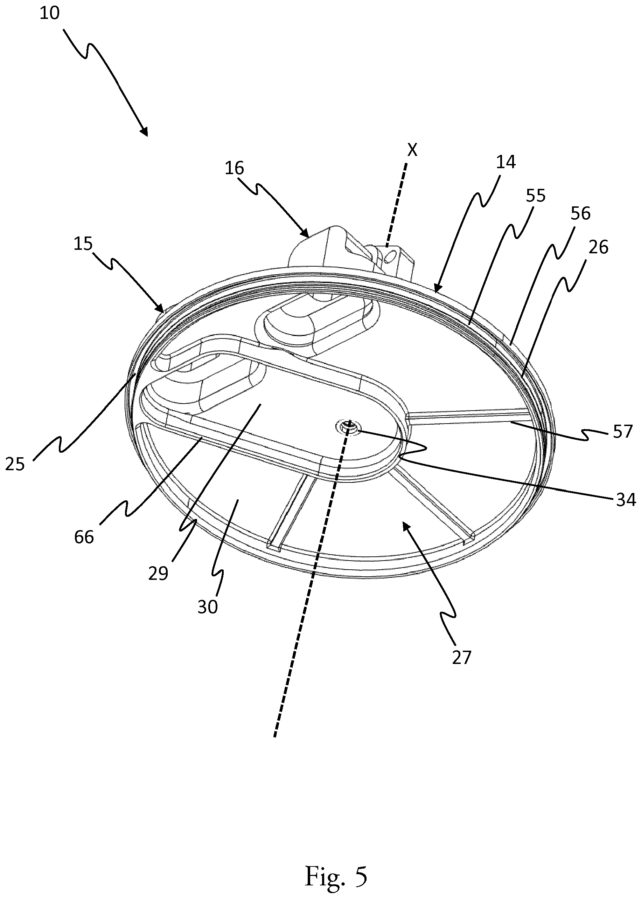

La figure 5 détaille le couvercle 10, vu du dessous, laissant apparaitre une deuxième surface 27, intérieure au dispositif thermique à capacité de stockage.

Sur cette vue, on observe la bordure périphérique 14 du couvercle 10. Une rainure 25 creusée dans la bordure périphérique 14 est destinée à recevoir le bandeau de la deuxième extrémité de l'enceinte. La bordure périphérique 14 comporte de part et d'autre de la rainure 25 deux bords périphériques 55, 56, un premier bord périphérique 55 étant situé plus proche de l'axe central X du conduit qu'un deuxième bord périphérique 56. Le premier bord périphérique 55 est plus grand que le deuxième bord périphérique 56, selon une mesure prise longitudinalement le long de l'axe de l'axe central X du conduit. C'est le premier bord périphérique 55 qui porte un joint torique 26 permettant de joindre hermétiquement le couvercle 10 à l'enceinte.

La figure 5 montre également la communication entre le premier port 15 et la première chambre 29, ainsi que celle entre le deuxième port 16 et la deuxième chambre 30. Les deux chambres 29, 30 sont ici visibles car dépourvues du disque les délimitant avec le couvercle 10. Il est à noter par ailleurs que les pourtours des chambres 29, 30 sont faits de bords arrondis, afin de ne pas contraindre le fluide caloporteur dans son déplacement.

La première chambre 29 couvre une surface s'étendant sur la deuxième surface 27, du premier bord périphérique 55 vers l'axe central X du conduit, afin que vienne s'y insérer le conduit. Cette surface couverte par la première chambre 29 est dimensionnée pour couvrir une surface à minima équivalente à la première ouverture du conduit. Sur la deuxième surface 27, interne, du couvercle 10, au sein de la première chambre 29, est par ailleurs visible le passage 34 ménagé au centre du couvercle 10 permettant le passage du tirant selon l'axe central X du conduit.

La deuxième chambre 30 prend une forme en croissant, embrassant la première chambre 29. Cette deuxième chambre 30 couvre une surface plus importante du couvercle 10 que la première chambre 29. Le couvercle 10 est par ailleurs pourvu de trois nervures de renfort 57, disposées radialement sur la deuxième surface 27 du couvercle 10, plus particulièrement dans la deuxième chambre 30, ces nervures de renfort 57 s'étendant entre une paroi de séparation 66 et le premier bord périphérique 55.

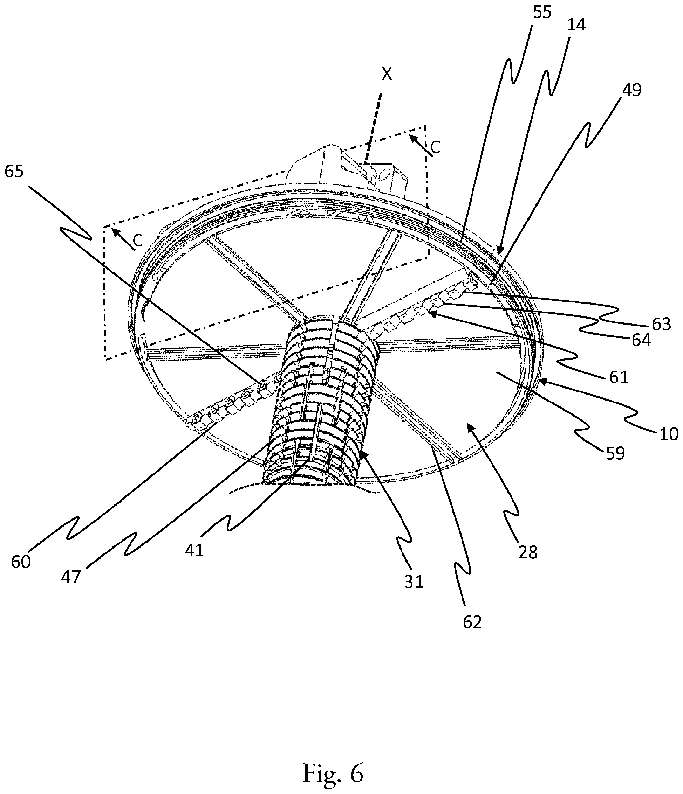

La figure 6 montre à présent le couvercle 10 coopérant avec le disque 28 et le conduit 31.

Le disque 28 et le couvercle 10 sont centrés par rapport à l'axe central X du conduit 31. Le disque 28 couvre une surface inférieure à celle du couvercle 10, de sorte à ce que le disque 28 n'entre pas au contact du premier bord périphérique 55 de la bordure périphérique 14 du couvercle 10. Cet écart entre le disque 28 et le premier bord périphérique 55 fait que seule la première chambre 29 est totalement couverte par le disque 28 et le conduit 31, alors qu'un passage 49 est présent pour la deuxième chambre 30 afin de mettre en relation cette deuxième chambre 30 avec le troisième espace.

La première ouverture du conduit 31 est positionnée au regard de la première chambre. Ce conduit 31, pourvu d'ouvertures radiales 41, prend appui sur le disque 28, au niveau de l'ouverture ménagée dans le disque 28, de sorte à ce que le fluide caloporteur transite nécessairement, de la première chambre vers le deuxième espace, via le volume délimité par le conduit 31.

Le disque 28 a une première face, dirigée vers la première et la deuxième chambre, et la deuxième face 59 dirigée vers l'enroulement. Cette deuxième face 59 comporte par exemple deux peignes 60, 61, s'étendant radialement à partir du conduit 31, et également des paires de nervures de renfort 62, s'étendant radialement à partir du conduit 31 également. Les peignes 60, 61, comprennent une pluralité de parties creusées 63, pour le logement d'une spire de l'enroulement 48, et une pluralité de parties saillantes 64 où prend appui la spire adjacente disposée en quinconce. Parties creusées 63 et parties saillantes 64 s'alternent radialement. Le profil de chacun des parties saillantes 64 correspond au profil d'un tube 24, comme cela peut être retrouvé pour les cannelures hélicoïdales 47.

Un dispositif de positionnement 65 est retrouvé sous chaque partie saillante 64 des peignes 60, 61. Chaque dispositif de positionnement 65 est orienté dans un plan parallèle au plan du disque 28, et est perpendiculaire à l'axe central X du conduit 31. Chaque dispositif de positionnement 65 est destiné à l'insertion d'une extrémité de tube 24, servant lors de la réalisation de l'enroulement, afin d'initier cet enroulement, et servant également au maintien de cette même extrémité de tube 24 lors de la mise en oeuvre du dispositif thermique à capacité de stockage 1. Autant de dispositifs de positionnement 65 sont nécessaires que de tubes 24 sont inclus dans l'enroulement.

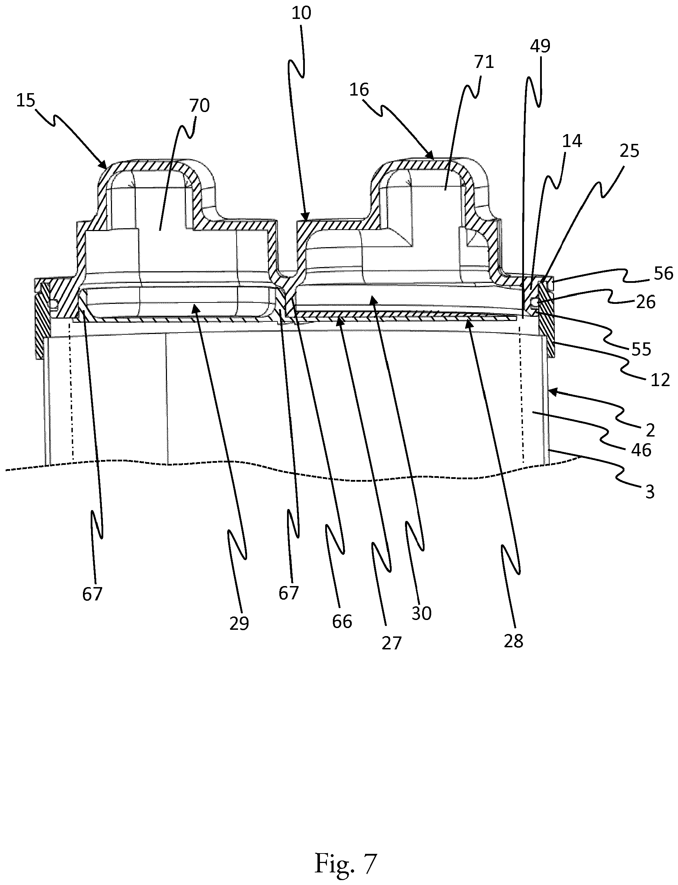

La figure 7 correspond à une vue selon la coupe C-C de la deuxième extrémité de l'enceinte 2. Cette coupe C-C coupant le premier port 15, et le deuxième port 16, coupe C-C présentée en figure 6. Y sont illustrées en coupe la séparation de la première chambre 29 et de la deuxième chambre 30, et l'emboîtement du couvercle 10 sur le bandeau 12 de l'enceinte 2.

Le couvercle 10 est pourvu d'une deuxième surface 27, interne au dispositif thermique à capacité de stockage 1, en appui sur un disque 28 afin de délimiter avec le couvercle 10 une première chambre 29 et une deuxième chambre 30, grâce notamment à des parois portées par le couvercle 10 et le disque 28.

La première chambre 29 et de la deuxième chambre 30 sont séparées d'une paroi de séparation 66, périphérique à la première chambre 29, comme visible sur la figure 5. Cette paroi de séparation 66 est portée par le couvercle 10 et est destinée à s'emboîter avec un bord emboîtant 67 porté par le disque 28, bord emboîtant 67 et paroi de séparation 66 étant en contact l'un contre l'autre de sorte à ce que le bord emboitant 67 soit à l'intérieur de la paroi de séparation 66. Le cloisonnement de la première chambre 29 et de la deuxième chambre 30, issu de la coopération entre le couvercle 10 et le disque 28, est ainsi assuré.

La première chambre 29 et de la deuxième chambre 30 communiquent respectivement avec les ports 15, 16. Dans le premier port 15 et le deuxième port 16, sont ménagées respectivement une première cavité 70 et une deuxième cavité 71. La première cavité 70 est ouverte sur la première chambre 29 ; la deuxième cavité 71 est ouverte sur la deuxième chambre 30.

Le troisième espace 46 se termine au niveau du disque 28 par un passage 49, étroit, formé entre le disque 28 et la bordure périphérique 14 du couvercle 10, permettant la communication entre le troisième espace 46 et la deuxième chambre 30.

Le couvercle 10 dispose d'une rainure 25 ayant la circonférence de la paroi périphérique 3 de l'enceinte 2. La rainure 25 coopère avec les deux bords périphériques 55, 56, et le joint torique 26 porté par le premier bord périphérique 55. Ce joint torique 26 s'intercale entre le bandeau 12 et la bordure périphérique 14 du couvercle 10.

On comprend à la lecture de ce qui précède que la présente invention propose un dispositif thermique à capacité de stockage pour véhicule configuré pour permettre un stockage important de chaleur, et ce en densifiant le matériau à changement de phase logé dans l'enceinte, tout en minimisant les pertes de charge du fluide caloporteur circulant dans le dispositif thermique. Ce dispositif thermique à capacité de stockage, destiné à être intégré tant dans les véhicules électriques, que thermiques ou hybrides, conserve par ailleurs des dimensions optimisées du fait de la forte compacité des éléments le constituant. La compacité ne se fait pas au détriment de la qualité des échanges thermique au sein du dispositif thermique à capacité de stockage selon l'invention L'homogénéité de la circulation du fluide caloporteur est par ailleurs favorisée.

L'invention ne saurait toutefois se limiter aux moyens et configurations décrits et illustrés ici, et elle s'étend également à tout moyen ou configuration équivalents et à toute combinaison technique opérant de tels moyens. En particulier, la forme dispositif thermique à capacité de stockage pour véhicule peut être modifiée sans nuire à l'invention, dans la mesure où le dispositif thermique à capacité de stockage pour véhicule, *in fine,* remplit les mêmes fonctionnalités que celles décrites dans ce document.

## Revendications

1. Dispositif thermique à capacité de stockage (1) pour véhicule comprenant une enceinte (2) qui loge un conduit (31) et au moins un tube (24) contenant un matériau à changement de phase (44), l'au moins un tube (24) étant enroulé autour du conduit (31) pour former un enroulement (48), le conduit (31) délimitant un premier espace (42) dans lequel un fluide est apte à circuler, l'enroulement (48) comprenant un deuxième espace (45) dans lequel le fluide est apte à circuler, **caractérisé en ce que** le conduit (31) comprend des ouvertures radiales (41) mettant en communication le premier espace (42) et le deuxième espace (45).

2. Dispositif thermique à capacité de stockage (1) selon la revendication 1, dans lequel les ouvertures radiales (41) sont des fentes.

3. Dispositif thermique à capacité de stockage (1) selon l'une quelconque des revendications précédentes, dans lequel l'enceinte (2) est pourvue d'une paroi périphérique (3) et d'un fond (5) à l'une des extrémités (4) de la paroi périphérique (3), ledit dispositif thermique à capacité de stockage (1) comprenant un couvercle (10) possédant une première ouverture (17) et une deuxième ouverture (18), le couvercle (10) étant disposé à une autre extrémité de la paroi périphérique (3).

4. Dispositif thermique à capacité de stockage (1) selon l'une quelconque des revendications précédentes, dans lequel l'enceinte (2) comprend un troisième espace (46) dans lequel le fluide est apte à circuler, ménagé radialement entre l'enroulement (48) et une surface interne (6) de la paroi périphérique (3) de l'enceinte (2).

5. Dispositif thermique à capacité de stockage (1) selon l'une quelconque des revendications précédentes, dans lequel l'enroulement (48) est contenu dans une ceinture de maintien (50) ajourée.

6. Dispositif thermique à capacité de stockage (1) selon les revendications 4 et 5, comprenant au moins un élément d'espacement (68) déterminant le troisième espace (46).

7. Dispositif thermique à capacité de stockage (1) selon la revendication précédente, dans lequel l'élément d'espacement (68) comprend des nervures (52) disposées parallèlement à un axe central (X) du conduit (31).

8. Dispositif thermique à capacité de stockage (1) selon l'une les revendications 3 à 7, dans lequel le couvercle (10) de l'enceinte (2) et un disque (28) disposé entre le couvercle (10) et l'enroulement (48), délimitent une première chambre (29) et une deuxième chambre (30).

9. Dispositif thermique à capacité de stockage (1) selon la revendication 8, dans lequel le disque (28) comprend au moins un dispositif de positionnement (65) qui s'engage avec une extrémité longitudinale du tube (24).

10. Dispositif thermique à capacité de stockage (1) selon l'une quelconque des revendications précédentes, dans lequel le conduit (31) est pourvu à sa surface externe (38) d'au moins une cannelure hélicoïdale (47).

## Patentansprüche

1. Wärmevorrichtung mit Speicherkapazität (1) für ein Fahrzeug umfassend ein Gehäuse (2), das eine Leitung (31) und wenigstens ein Rohr (24) beherbergt, das ein Phasenwechselmaterial (44) enthält, wobei das wenigstens eine Rohr (24) um die Leitung (31) gewickelt ist, um eine Wicklung (48) zu bilden, wobei die Leitung (31) einen ersten Raum (42) begrenzt, in dem ein Fluid zirkulieren kann, wobei die Wicklung (48) einen zweiten Raum (45) umfasst, in dem das Fluid zirkulieren kann, **dadurch gekennzeichnet, dass** die Leitung (31) radiale Öffnungen (41) umfasst, die den ersten Raum (42) und den zweiten Raum (45) in Verbindung bringen.

2. Wärmevorrichtung mit Speicherkapazität (1) nach Anspruch 1, wobei die radialen Öffnungen (41) Schlitze sind.

3. Wärmevorrichtung mit Speicherkapazität (1) nach einem der vorhergehenden Ansprüche, wobei das Gehäuse (2) mit einer Umfangswand (3) und einem Boden (5) an einem der Enden (4) der Umfangswand (3) versehen ist, wobei die Wärmevorrichtung mit Speicherkapazität (1) einen Deckel (10) umfasst, der eine erste Öffnung (17) und eine zweite Öffnung (18) besitzt, wobei der Deckel (10) an einem anderen Ende der Umfangswand (3) angeordnet ist.

4. Wärmevorrichtung mit Speicherkapazität (1) nach einem der vorhergehenden Ansprüche, wobei das Gehäuse (2) einen dritten Raum (46) umfasst, in dem das Fluid zirkulieren kann, der radial zwischen der Wicklung (48) und einer Innenfläche (6) der Umfangswand (3) des Gehäuses (2) angeordnet ist.

5. Wärmevorrichtung mit Speicherkapazität (1) nach einem der vorhergehenden Ansprüche, wobei die Wicklung (48) in einem Haltegürtel (50) mit Öffnungen enthalten ist.

6. Wärmevorrichtung mit Speicherkapazität (1) nach den Ansprüchen 4 und 5, umfassend wenigstens ein Abstandselement (68), das den dritten Raum (46) bestimmt.

7. Wärmevorrichtung mit Speicherkapazität (1) nach dem vorhergehenden Anspruch, wobei das Abstandselement (68) Rippen (52) umfasst, die parallel zu einer Mittelachse (X) der Leitung (31) angeordnet sind.

8. Wärmevorrichtung mit Speicherkapazität (1) nach einem der Ansprüche 3 bis 7, wobei der Deckel (10) des Gehäuses (2) und eine Scheibe (28), die zwischen dem Deckel (10) und der Wicklung (48) angeordnet ist, eine erste Kammer (29) und eine zweite Kammer (30) begrenzen.

9. Wärmevorrichtung mit Speicherkapazität (1) nach Anspruch 8, wobei die Scheibe (28) wenigstens eine Positionierungsvorrichtung (65) umfasst, die in ein Längsende des Rohrs (24) eingreift.

10. Wärmevorrichtung mit Speicherkapazität (1) nach einem der vorhergehenden Ansprüche, wobei die Leitung (31) an ihrer Außenfläche (38) mit wenigstens einer schraubenförmigen Riffelung (47) versehen ist.

## Claims

1. Thermal storage capacity device (1) for a vehicle, comprising an enclosure (2) that houses a duct (31) and at least one tube (24) containing a phase-change material (44), the at least one tube (24) being wound around the duct (31) to form a coil (48), the duct (31) delimiting a first space (42) in which a fluid is able to circulate, the coil (48) comprising a second space (45) in which the fluid is able to circulate, **characterized in that** the duct (31) comprises radial openings (41) that place the first space (42) and the second space (45) in communication.

2. Thermal storage capacity device (1) according to Claim 1, wherein the radial openings (41) are slots.

3. Thermal storage capacity device (1) according to either one of the preceding claims, wherein the enclosure (2) is provided with a peripheral wall (3) and with a base (5) at one of the ends (4) of the peripheral wall (3), said thermal storage capacity device (1) comprising a cover (10) having a first opening (17) and a second opening (18), the cover (10) being arranged at another end of the peripheral wall (3).

4. Thermal storage capacity device (1) according to any one of the preceding claims, wherein the enclosure (2) comprises a third space (46) in which the fluid is able to circulate, which is formed radially between the coil (48) and an inner surface (6) of the peripheral wall (3) of the enclosure (2).

5. Thermal storage capacity device (1) according to any one of the preceding claims, wherein the coil (48) is contained within a perforated retaining surround (50).

6. Thermal storage capacity device (1) according to Claims 4 and 5, comprising at least one spacer element (68) that defines the third space (46).

7. Thermal storage capacity device (1) according to the preceding claim, wherein the spacer element (68) comprises ribs (52) arranged parallel to a central axis (X) of the duct (31).

8. Thermal storage capacity device (1) according to one of Claims 3 to 7, wherein the cover (10) of the enclosure (2) and a disc (28), which is arranged between the cover (10) and the coil (48), delimit a first chamber (29) and a second chamber (30).

9. Thermal storage capacity device (1) according to Claim 8, wherein the disc (28) comprises at least one positioning device (65) that engages with one longitudinal end of the tube (24).

10. Thermal storage capacity device (1) according to any one of the preceding claims, wherein the outer surface (38) of the duct (31) is provided with at least one helical flute (47).
